# EUROPÄISCHE PATENTSCHRIFT

(11) **EP 2 617 022 B1**
(45) Veröffentlichungstag und Bekanntmachung des Hinweises auf die Patenterteilung: **04.06.2014**
(21) Anmeldenummer: 11748656.3
(22) Anmeldetag: 25.08.2011
(51) Int. Cl.: G08G 1/16, B60W 50/08

(54) **VISUELLES FAHRERINFORMATIONS- UND WARNSYSTEM FÜR EINEN FAHRER EINES KRAFTFAHRZEUGS**
VISUAL DRIVER INFORMATION AND WARNING SYSTEM FOR A DRIVER OF A MOTOR VEHICLE
SYSTÈME VISUEL D'INFORMATION ET D'AVERTISSEMENT DU CONDUCTEUR D'UN VÉHICULE À MOTEUR

(30) Priorität: 15.09.2010 DE 102010040803
(43) Veröffentlichungstag der Anmeldung: 24.07.2013
(73) Patentinhaber: Continental Teves AG & Co. oHG, 60488 Frankfurt (DE)
(72) Erfinder: SWOBODA, Adam, 64521 Groß-Gerau (DE); STÄHLIN, Ulrich, 65670 Eschborn (DE)
(74) Vertreter: Brand, Markus
(86) Internationale Anmeldenummer: PCT/EP2011/064615
(87) Internationale Veröffentlichungsnummer: WO 2012/034834

(56) Entgegenhaltungen:
- EP-A1- 1 974 998
- EP-A2- 1 632 923
- WO-A1-2006/037402

## Beschreibung

Die Erfindung betrifft ein visuelles Fahrerinformations- und Warnsystem für einen Fahrer eines Kraftfahrzeugs gemäß Oberbegriff von Anspruch 1 und ein Verfahren gemäß Oberbegriff von Anspruch 16.

Auf verschiedenartigen Sensoren basierende Umfelderfassungssysteme sind im Stand der Technik bereits bekannt und in der Praxis weit verbreitet. Beispielsweise beschreibt die DE 102 41 464 A1 ein Verfahren zur Umfelderfassung eines Fahrzeugs mittels Sensoren auf Basis von z.B. Kamera, Radar, Ultraschall, Mikrowelle und Infrarot. Diese Sensoren können unabhängig voneinander eventuelle Hindernisse erfassen und so beispielsweise auch das Signal eines anderen Sensors validieren. Da diese Sensoren jedoch im Wesentlichen nur Objekte detektieren können, die nicht durch Hindernisse verborgen sind, eignen sie sich nur sehr eingeschränkt zur Warnung eines Fahrers vor Gefahren, welche für diesen nicht selbst sichtbar sind.

Anders hingegen verhält es sich mit den sog. Fahrzeug-zu-X-Systemen (V2X), welche - je nach dabei zum Einsatz kommenden Wellenlängen - auch eine Signalübertragung um Hindernisse herum erlauben. Falls die Beugungseigenschaften der für V2X genutzten Wellenlänge jedoch nicht geeignet sind, um eine Ausbreitung um Hindernisse herum zu ermöglichen, ist z.B. die Verwendung von Funkstationen möglich, die an geeigneten Stellen positioniert werden. Diese empfangen ein Signal und senden es anschließend weiter, wodurch ein Hindernis umgangen werden kann. Als Beispiel sei die DE 10 2008 037 883 A1 genannt, welche ein Verkehrsleitsystem offenbart, das auf Basis eines V2X-Systems die Verkehrssicherheit an Kreuzungen diese Daten sowie ggf. weitere Daten, wie z.B. die eigene Position, Geschwindigkeit und Bewegungsrichtung, an eine Ampelanlage. Dort können die Daten verarbeitet und an weitere Fahrzeuge gesendet werden. Somit wird unter anderem eine warnung vor Objekten ermöglicht, die für den Fahrer selbst nicht sichtbar sind. Durch die Integration von geeigneten Funkstationen in die Ampelanlagen wird eine räumlich sehr gut geeignete Position zum Senden und Empfangen der Signale ausgenutzt.

Die DE 10 2007 001 266 A1 offenbart ein Head-Up-Display (HUD), welches die Windschutzscheibe eines Fahrzeugs zur Darstellung von einfachen, zweidimensionalen Grafiken oder Beschriftungen im Sichtfeld des Fahrers nutzt. Dadurch erhöht sich der Komfort für den Fahrer während der Fahrt, da er nicht den Blick weg vom Straßenverkehr nach unten richten muss, um eine Anzeige im Armaturenbrett zu lesen. Da der Fahrer durch die Windschutzscheibe des Fahrzeugs auch weiterhin die Umgebung wahrnehmen kann, werden die vom HUD angezeigten Informationen der Umgebungswahrnehmung im Auge des Fahrers überlagert. Navigationshinweise, Markierungen besonderer Gebäude oder andere zweidimensionale Elemente können damit in die Umgebungswahrnehmung eingefügt werden. Dadurch nimmt der Fahrer wie gewohnt die Umgebung wahr und erhält zusätzliche, an die Umgebung angepasste Informationen über das HUD. Diese Technik ist unter dem Begriff "Augmented Reality" an sich bekannt.

Aus der EP 1 632 923 A2 ist ein Fahrerunterstützungssystem für ein Fahrzeug bekannt, welches Positionsbestimmungsmittel zum Bestimmen der Position des Fahrzeugs, Bewertungsinformationserfassungsmittel zum Erfassen von Bewertungsinformationen sowie Bewertungsmittel zum Bewerten, ob auf Grundlage der Bewertungsinformationen eine Warnung an den Fahrer ausgegeben werden soll und schließlich Bildinformationserzeugungsmittel zum Erzeugen virtueller Bildinformationen in Übereinstimmung mit der Art der auszugebenden Warnung umfasst. Die Bildinformationen werden dabei abhängig von der Bewertung durch die Bewertungsmittel, ob die Warnung ausgegeben werden soll, von den Bildinformationserzeugungsmitteln an Darstellungsmittel zum Darstellen der Bildinformationen ausgegeben.

Ein Nachteil der aus dem Stand der Technik bekannten Einrichtungen, die den Fahrer eines Fahrzeugs vor Gefahren warnen, besteht unter anderem darin, dass eine Situation anhand von einfachen, zweidimensionalen Grafiken nur stark stilisiert dargestellt wird. Da der Fahrer jedoch in erster Linie die Umgebung und somit reale, dreidimensionale Objekte beobachtet, muss er beim Betrachten einer stilisierten zweidimensionalen Darstellung seines Umfelds - unabhängig ob diese auf einem Bildschirm im Armaturenbrett oder auf einem HUD angezeigt wird - zunächst die Darstellung mit der Realität assoziieren.

Die Aufgabe der vorliegenden Erfindung besteht darin, dem Fahrer auf sofort verständliche, über die Möglichkeiten einer einfachen zweidimensionalen Darstellung hinausgehende Art und Weise, Informationen über Objekte und Gefahrenpotentiale in seiner Umgebung zu geben.

Diese Aufgabe wird erfindungsgemäß durch das visuelle Fahrerinformations- und Warnsystem gemäß Anspruch 1 und das Verfahren gemäß Anspruch 16 gelöst.

Das erfindungsgemäße visuelle Fahrerinformations- und Warnsystem für einen Fahrer eines Kraftfahrzeugs, welches eine Informationsdarstellungseinrichtung, mindestens eine Umfeldinformationsdatenerfassungs- und/oder mindestens eine Umfeldinformationsdatenaustauscheinrichtung umfasst, zeichnet sich dadurch aus, dass dem Fahrer eine zweidimensionale Projektion mindestens eines dreidimensionalen Modells eines tatsächlich vorhandenen, stationären und/oder beweglichen Objekts dargestellt wird, welches für den Fahrer nicht sichtbar ist. Dadurch können dem Fahrer auf für ihn sofort verständliche Art und Weise Informationen über verborgene Objekte und Gefahrenpotentiale in seiner Umwelt gegeben werden, die er selbst nicht wahrnehmen kann. Da die Darstellung ein dreidimensionales Modell zeigt und der Fahrer ebenfalls reale, also dreidimensionale Objekte im Verkehrsgeschehen beobachtet, erkennt er sofort das dargestellte Objekt und dessen Bedeutung. Die bei einer nur stilisierten, zweidimensionalen Darstellung vorausgesetzte Notwendigkeit, die Darstellung zunächst mit der wahrgenommenen Realität assoziieren zu müssen, entfällt vorteilhaft und erlaubt dem Fahrer ein schnelleres Reagieren.

Bevorzugt ist es vorgesehen, dass das mindestens eine dargestellte Objekt in ein dem Fahrer ebenfalls dargestelltes Kamerabild der Umgebung eingefügt wird. Daraus ergibt sich der Vorteil, dass das angezeigte Bild der tatsächlichen Umgebung entspricht, wie sie vom Fahrer wahrgenommen wird. Der Fahrer muss sich somit nicht erst im dargestellten Umgebungsbild orientieren, um die Position des für ihn verborgenen Objekts einer Position in der realen Umgebung zuzuordnen. Er erkennt vielmehr sofort, an welcher Stelle der realen Umgebung sich das Objekt befindet.

In einer weiteren vorteilhaften Ausführungsform der Erfindung ist es vorgesehen, dass das mindestens eine dargestellte Objekt in eine dem Fahrer ebenfalls dargestellte zweidimensionale Projektion eines dreidimensionalen Umgebungsmodells eingefügt wird. Unter Umständen kann es vorteilhaft sein, die Umgebung für die Darstellung als dreidimensionales Modell zu rekonstruieren. Durch das gezielte Weglassen von Oberflächentexturen in der Umgebung kann beispielsweise die Aufmerksamkeit des Fahrers auf ein für ihn verborgenes Objekt gelenkt werden. Trotzdem wird auch in diesem Fall noch eine dreidimensionale Umgebungsdarstellung erzeugt, in welcher der Fahrer sich im Gegensatz zu einer stilisierten zweidimensionalen Darstellung sofort zurecht findet.

Gemäß einer weiteren bevorzugten Ausführungsform ist es vorgesehen, dass das System Modelldaten zur Darstellung eines dreidimensionalen Umgebungsmodells aus einer digitalen Karte ausliest. Da digitale Karten in Fahrzeugsystemen weit verbreitet sind, stellt dies eine einfache Möglichkeit dar, die zur Modellerzeugung notwendigen Daten bereitzustellen. Zweckmäßigerweise ist es vorgesehen, dass das System dem Fahrer in der zweidimensionalen Projektion darüber hinaus auch mindestens ein dreidimensionales Modell eines stationären und/oder beweglichen Objekts darstellt, welches für den Fahrer sichtbar ist. Dadurch steigt der Komfort beim Betrachten der Darstellung für den Fahrer weiter, weil er seine Umgebung in der Darstellung vollständig wiedererkennt. Zusätzlich steigt das Vertrauen des Fahrers in das erfindungsgemäße System, da er die Zuverlässigkeit des Systems beim Erkennen von Objekten auf diesem Weg selbst beobachten kann.

Außerdem ist es vorteilhaft, dass das bewegliche Objekt vom Betrachtungspunkt des Fahrers ein einem Querverkehr zugehöriges Fahrzeug ist. Querverkehr an nicht oder nur schwer einsehbaren Kreuzungen stellt ein hohes Unfallrisiko dar und ist somit ein vorteilhafter Anwendungsfall des erfindungsgemäßen Systems.

Weiterhin ist es vorteilhaft, dass das stationäre Objekt vom Betrachtungspunkt des Fahrers ein hinter einer Straßenabzweigung oder Straßenbiegung verborgenes Hindernis auf einer Fahrbahn ist. Ebenso wie Querverkehr stellt ein stationäres Objekt an einer nicht oder nur schwer einsehbaren Kreuzung ein hohes Unfallrisiko dar, sofern es sich als Hindernis auf der Fahrbahn befindet und für den Fahrer vor dem Abbiegevorgang nicht sichtbar ist. Daher stellt auch diese Situation einen vorteilhaften Anwendungsfall des erfindungsgemäßen Systems dar.

Nach einer weiteren bevorzugten Ausführungsform der Erfindung ist es vorgesehen, dass das System während des Fahrzeugbetriebs permanent aktiviert ist. Somit hat der Fahrer Gelegenheit, sich an das erfindungsgemäße System zu gewöhnen und wird im Gefahrenfall nicht durch die Anzeige des Systems überrascht oder abgelenkt.

Außerdem ist es vorteilhaft, dass das System beim Erkennen einer Kollisionsgefahr mit einem Objekt optische und/oder akustische und/oder haptische Warnungen an den Fahrer ausgibt. Somit kann der Fahrer auf eine Gefahr aufmerksam gemacht werden und geeignete Maßnahmen zur Unfallvermeidung ergreifen.

Weiterhin ist es bevorzugt, dass das System bei Erkennen einer Kollisionsgefahr mit einem Objekt, die Darstellungsart des Objekts, mit welchem Kollisionsgefahr besteht und/oder der Umgebung, ändert. Indem das System die Darstellungsart desjenigen Objekts ändert, mit welchem Kollisionsgefahr besteht, wird die Aufmerksamkeit des Fahrers gezielt auf das betreffende Objekt gelenkt. Zusätzlich kann in diesem Fall beispielsweise die Darstellungsart der Umgebung von einem Kamerabild hin zu einem dreidimensionalen Modell geändert werden, um den Detailgrad der Umgebungsdarstellung zu reduzieren, was die Aufmerksamkeit des Fahrers weiter auf das entsprechende Objekt zieht.

Vorzugsweise zeichnet sich das erfindungsgemäße System dadurch aus, dass das System bei Erkennen einer Kollisionsgefahr mit einem Objekt, das Objekt, mit welchem Kollisionsgefahr besteht, mittels eines Signalfarbtons aus der durch die Informationsdarstellungseinrichtung dargestellten Umgebung für den Fahrer optisch hervorhebt. Dies ist eine ebenso einfache wie effektive Möglichkeit, die Aufmerksamkeit des Fahrers gezielt und schnell auf das Objekt zu lenken.

Nach einer weiteren bevorzugten Ausführungsform der Erfindung ist es vorgesehen, dass das System bei Erkennen einer Kollisionsgefahr mit einem Objekt, das Objekt, mit welchem Kollisionsgefahr besteht, mittels einer mit konstanter oder veränderlicher Frequenz variierenden Darstellungsintensität aus der durch die Informationsdarstellungseinrichtung dargestellten Umgebung für den Fahrer optisch hervorhebt. Dadurch ergibt sich der Vorteil, dass die Eindringlichkeit der Warnung noch weiter gesteigert werden kann, indem das Objekt mit konstanter Frequenz blinkend oder sogar mit veränderlicher Frequenz blinkend dargestellt wird. Ein derartig hervorgehobenes Objekt wird vom Fahrer sofort wahrgenommen.

Erfindungsgemäß ist vorgesehen, dass das System bei Erkennen einer Kollisionsgefahr mit einem Objekt andere Objekte unterhalb einer vorgegebenen Schwellengröße nicht mehr darstellt. Dieses Vorgehen beinhaltet ebenfalls den Vorteil, dass es auf einfache und intuitive Weise geeignet ist, die Aufmerksamkeit des Fahrers auf ein Objekt zu lenken, welches eine Gefahr darstellt.

Weiterhin ist es bevorzugt, dass das System zusätzlich Navigationsdaten und/oder Navigationsanweisungen einer im Fahrzeug vorhandenen Navigationseinheit darstellt. Daraus ergibt sich der Vorteil, dass die ohnehin vorhandene Anzeigeeinrichtung zusätzlich dazu genutzt wird, dem Fahrer noch weitere Informationen zu geben. Die Navigationsanweisungen können dem Fahrer direkt in die Umgebungsdarstellung eingeblendet werden, z.B. in Form von Pfeilen, welche scheinbar auf einer Straßenabbiegung in eine bestimmte Richtung zeigen. Ebenso ist es möglich, eine einzelne Spur auf einer mehrspurigen Fahrbahn durch einen Navigationshinweis hervorzuheben oder Straßennamen in der Projektion direkt auf die entsprechende Straße zu schreiben. Damit sich die Navigationshinweise weitestgehend optimal in die Projektion der dreidimensionalen Umgebungsdarstellung einfügen, können auch sie vom System dreidimensional erzeugt und dann in die zweidimensionale Projektion eingefügt werden. Somit ergibt sich für den Fahrer eine in ihrer Darstellungsart einheitliche, angenehme und intuitive Betrachtungsweise.

Vorzugsweise zeichnet sich das erfindungsgemäße System dadurch aus, dass das System zusätzlich eine Umfeldinformationsdatenauswerteeinrichtung umfasst, welche mindestens eines der folgenden Signale ausliest:
- Signale der Umfeldinformationsdatenerfassungseinrichtung,
- Signale der Umfeldinformationsdatenaustauscheinrichtung,
- ESP-Sensorsignale,
- Positionsbestimmungseinheitssignale und
- Navigationseinheitssignale.

Durch das gemeinsame Auslesen von Signalen der Umfeldinformationsdatenerfassungseinrichtung und der Umfeldinformationsdatenaustauscheinrichtung können die Signale und Daten beider Einrichtungen verglichen werden. Dies erlaubt beispielsweise eine Validierung von Objekten, welche von beiden Einrichtungen erfasst werden und somit eine größere Zuverlässigkeit des Systems. Durch das zusätzliche Auslesen von Positionsbestimmungssignalen kann beispielsweise erkannt werden, auf welcher Spur einer mehrspurigen Straße sich das Fahrzeug befindet. Falls ein Hindernis erkannt wird, das sich zwar in Fahrtrichtung voraus befindet, allerdings auf einer anderen Fahrspur, so kann wegen der genauen Positionskenntnis eine unnötige Alarmierung des Fahrers vermieden werden, da ein Hindernis auf einer anderen Fahrspur keine Gefahr für das eigene Fahrzeug darstellt. Insbesondere wenn die Information nicht von der fahrzeugeigenen Umfeldinformationsdatenerfassungseinrichtung erfasst wurde sondern nur die Positionsdaten des Objekts mittels der Umfeldinformationsdatenaustauscheinrichtung übertragen wurden, stellt dies einen Vorteil dar. Durch das Miteinbeziehen von ESP-Sensorsignalen ergibt sich weiterhin der Vorteil, dass die Geschwindigkeit und Fahrstabilität des Fahrzeugs vom erfindungsgemäßen System berücksichtigt werden können. So kann bei hoher Geschwindigkeit des Fahrzeugs oder bei Vorliegen einer instabilen Fahrsituation entsprechend früher eine Warnung an den Fahrer ausgegeben werden, als unter anderen Umständen. Mittels der Navigationseinheitssignale kennt das System auch die geplante Fahrtroute des Fahrzeugs und kann so bereits frühzeitig auf Objekte hinweisen, die nach einer Abbiegung auf der Fahrtroute liegen und für den Fahrer noch nicht sichtbar sind. Durch die Kenntnis der Fahrtroute ist dem System bereits im Voraus bekannt, dass diese Objekte eine besondere Gefahr darstellen.

In einer weiteren bevorzugten Ausführungsform der Erfindung ist es vorgesehen, dass die Umfeldinformationsdatenerfassungseinrichtung auf Basis von Radar und/oder Kamera und/oder Lidar und/oder Laser Umfeldinformationsdaten erfasst. Derartige Sensorsysteme sind bereits weit verbreitet und sehr gut zur Umfelderfassung geeignet. Somit müssen keine zusätzlichen Sensoren aufgewandt werden, was die Gesamtkosten des Systems niedrig hält.

Bevorzugt ist es vorgesehen, dass die Umfeldinformationsdaten der Umfeldinformationsdatenerfassungseinrichtung zumindest Positionsdaten, geometrische Daten, Geschwindigkeitsdaten und/oder Bewegungsrichtungsdaten eines statischen oder sich bewegenden Objekts sind. Somit können die Objekte mittels der Positionsdaten aus Sicht des Fahrers in der Darstellung an ihrer tatsächlichen Position eingefügt werden, selbst wenn sie für die fahrzeugeigene Umfeldinformationsdatenerfassungseinrichtung nicht erfassbar sind. Außerdem erlauben die übertragenen geometrischen Daten, die entsprechenden Objekte ebenfalls als dreidimensionale Modelle in die zweidimensionale Projektion einzufügen und dem Fahrer eine Vorstellung über Größe, Form und evtl. Art des Objekts (anderes Fahrzeug, Straßensperre, umgestürzter Baum, etc.) zu geben. Die Geschwindigkeitsdaten und die Bewegungsrichtungsdaten ermöglichen es, eine eventuelle Gefahr genauer vorherzusagen und ggf. eine Warnung auszugeben, wenn aufgrund der Geschwindigkeiten und Bewegungsrichtungen des eigenen Fahrzeugs und des sich bewegenden Objekts eine Kollisionsgefahr festgestellt wird. Außerdem kann dadurch für den Fahrer eine realistischere Umgebungsdarstellung erzeugt werden, welcher er zusätzliche, für ihn relevante Informationen entnehmen kann.

In einer weiteren vorteilhaften Ausführungsform der Erfindung ist es vorgesehen, dass die Umfeldinformationsdatenaustauscheinrichtung auf Basis mindestens einer der folgenden Verbindungsarten Umfeldinformationsdaten und/oder Fahrzeugdaten mit mindestens einer anderen Umfeldinformationsdatenaustauscheinrichtung austauscht:
- WLAN-Verbindung (bevorzugt nach IEEE 802.11p, aber auch andere IEEE 802.11 Versionen),
- ISM-Verbindung (Industrial, Scientific, Medical Band),
- Infrarotverbindung und
- Mobilfunkverbindung.

Diese Verbindungsarten bieten dabei unterschiedliche Vorund Nachteile, je nach Art und Wellenlänge. WLAN-Verbindungen ermöglichen z.B. einen schnellen Verbindungsaufbau und eine hohe Datenübertragungsrate. Eine Datenübertragung um ein Hindernis herum ist jedoch nur begrenzt möglich. ISM-Verbindungen hingegen bieten zwar eine geringere Datenübertragungsrate, erlauben es aber, auch Daten um ein Sichthindernis herum auszutauschen. Besonders geeignet sind hier Frequenzbereiche im Sub-GHz-Bereich, wie z.B. bei 434 MHz oder 868 MHz. Infrarotverbindungen wiederum bieten eine geringe Datenübertragungsrate, die bei fehlender Sichtverbindung zudem stark eingeschränkt wird. Mobilfunkverbindungen schließlich werden durch Sichthindernisse nicht beeinträchtigt und bieten eine gute Datenübertragungsrate. Dafür ist der Verbindungsaufbau vergleichsweise langsam und das System funktioniert nur dort, wo Verbindung zu einer Mobilfunkbasisstation besteht. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können.

In einer weiteren bevorzugten Ausführungsform ist es vorgesehen, dass die gesendeten Fahrzeugdaten zumindest Positionsdaten und/oder Geschwindigkeitsdaten und/oder Bewegungsrichtungsdaten und/oder Lenkwinkeldaten und/oder Kurvenradiusdaten und/oder Navigationsdaten und/oder Daten über den Fahrzeugtyp umfassen. Zumindest ein Teil dieser Daten ist notwendig, um die Fahrerinformations- und Warnsysteme in anderen Fahrzeugen mit zur korrekten Darstellung des eigenen Fahrzeugs notwendigen Informationen zu versorgen. Je mehr dieser Daten gesendet werden, desto genauer kann das eigene Fahrzeug in einem anderen System dargestellt werden und desto realitätsnäher kann es in die Umgebungsdarstellung eines anderen Systems eingefügt werden. Außerdem wird die Vorhersage, ob eine Kollisionsgefahr mit dem sendenden Fahrzeug besteht, zuverlässiger, je mehr dieser Daten dem empfangenden Fahrzeug zur Verfügung stehen.

Zweckmäßigerweise ist es vorgesehen, dass die Umfeldinformationsdatenaustauscheinrichtung zusätzlich Modelldaten zur Erzeugung eines dreidimensionalen Modells des eigenen Fahrzeugs sendet. Dies erlaubt es dem empfangenden System, das sendende Fahrzeug als realistisches dreidimensionales Modell darzustellen, so dass der Fahrer alleine aufgrund der Darstellung Fahrzeugart, Fahrzeugmarke und Fahrzeugmodell erkennen kann. Dies erhöht den Informationsgehalt der Darstellung, ohne die Darstellung dadurch unübersichtlich werden zu lassen.

Außerdem ist es vorteilhaft, dass die Umfeldinformationsdatenauswerteeinrichtung die mittels Umfeldinformationsdatenerfassungs- und/oder Umfeldinformationsdatenaustauscheinrichtung erfassten Daten auf eine mögliche Kollisionsgefahr des eigenen Fahrzeugs mit für den Fahrer nicht sichtbaren Objekten hin analysiert. Dadurch ergibt sich der Vorteil, dass dem Fahrer nicht nur die für ihn nicht sichtbaren Objekte dargestellt werden, sondern darüber hinaus kann er vor einer Kollisionsgefahr mit diesen Objekten gewarnt werden.

Weiterhin ist es vorteilhaft, dass die Umfeldinformationsdatenauswerteeinrichtung die mittels Umfeldinformationsdatenerfassungs- und/oder Umfeldinformationsdatenaustauscheinrichtung erfassten Daten darüber hinaus auch auf eine mögliche Kollisionsgefahr des eigenen Fahrzeugs mit für den Fahrer sichtbaren Objekten hin analysiert. Somit ergibt sich der weitere Vorteil, dass der Fahrer auch dann gewarnt wird, wenn eine Kollisionsgefahr mit einem Objekt besteht, das er selbst direkt wahrnehmen kann.

Nach einer weiteren bevorzugten Ausführungsform der Erfindung ist es vorgesehen, dass ein ausschließlich mittels Fahrzeug-zu-X-Kommunikation wahrnehmbares Objekt als "für den Fahrer nicht sichtbar" eingestuft wird. Da die Fahrzeug-zu-X-Kommunikation eine Datenübertragung über das Sichtfeld des Fahrers hinaus und über die Wahrnehmung der Umfeldinformationsdatenerfassungseinrichtung hinaus erlaubt, kann auf diese Weise zwischen Objekten unterschieden werden, welche für den Fahrer sichtbar sind und Objekten, welche für den Fahrer nicht sichtbar sind. Die für den Fahrer unsichtbaren Objekte können in der Darstellung beispielsweise noch einmal besonders hervorgehoben werden, um den Fahrer darauf besonders aufmerksam zu machen.

Außerdem ist es vorteilhaft, dass ein mittels mindestens einem Umfeldsensor wahrnehmbares Objekt als "für den Fahrer sichtbar" eingestuft wird. Sofern das Objekt von mindestens einem Umfeldsensor detektiert wird, kann davon ausgegangen werden, dass eine direkte Sichtverbindung vom Fahrer zum entsprechenden Objekt besteht und der Fahrer das Objekt also sehen kann. Sofern keine Kollisionsgefahr besteht, kann in diesem Fall darauf verzichtet werden, den Fahrer in der Darstellung noch einmal besonders auf das entsprechende Objekt hinzuweisen, um die Übersichtlichkeit der Darstellung zu gewährleisten.

Weiterhin ist es bevorzugt, dass ein mittels mindestens einem Umfeldsensor wahrnehmbares Objekt nur dann als "für den Fahrer sichtbar" eingestuft wird, wenn es sich im Frontverkehrsbeobachtungssichtfeld des Fahrers befindet. Dadurch ergibt sich der Vorteil, dass das System ein hinter dem Fahrzeug befindliches Objekt als "für den Fahrer nicht sichtbar" einstuft, da davon ausgegangen werden muss, dass der Fahrer den größten Teil seiner Aufmerksamkeit dem Verkehrsgeschehen in seinem Frontverkehrsbeobachtungssichtfeld widmet, obwohl eine direkt Sichtverbindung besteht. Somit können ggf. auch diese Objekte in der Darstellung besonders hervorgehoben werden.

Vorzugsweise zeichnet sich das erfindungsgemäße System dadurch aus, dass die Umfeldinformationsdatenauswerteeinrichtung aus den von der Umfeldinformationsdatenerfassungseinrichtung erfassten oder aus den von der/den Umfeldinformationsdatenaustauscheinrichtung empfangen Daten ein dreidimensionales Umgebungsmodell errechnet. Daraus ergibt sich der Vorteil, dass jeweils ein aktuelles Modell dargestellt wird, welches die tatsächlichen Umfeldgegebenheiten realitätsnah widerspiegelt. In diesem Fall entfällt außerdem die Notwendigkeit, die Modelldaten digitalem Kartenmaterial zu entnehmen, welches häufig nicht auf einem aktuellen Stand ist.

In einer weiteren bevorzugten Ausführungsform der Erfindung ist es vorgesehen, dass die Umfeldinformationsdarstellungseinrichtung ein im Wesentlichen bekanntes Head-Up-Display (HUD) ist. Dadurch muss der Fahrer den Blick nicht vom Verkehrsgeschehen nehmen und auf eine Anzeige im Armaturenbrett richten. Der Fahrer hat somit stets das Verkehrsgeschehen vor Augen und wird nicht von diesem abgelenkt.

Weiterhin ist es bevorzugt, dass das HUD die Darstellung auf die Frontscheibe des Fahrzeugs projiziert. Somit muss keine zusätzliche transparente Anzeigeeinrichtung im Gesichtsfeld des Fahrers bereit gestellt werden, wodurch auch die Akzeptanz des Systems durch den Fahrer steigt.

Gemäß einer weiteren bevorzugten Ausführungsform der Erfindung ist es vorgesehen, dass das HUD die Darstellung in das gesamte Verkehrsbeobachtungssichtfeld des Fahrers einprojiziert. Indem nicht nur die Frontscheibe, sondern alle Fahrzeugscheiben, durch die der Fahrer das Verkehrsgeschehen beobachtet, zur Darstellung genutzt werden, können dem Fahrer die dargestellten Informationen dort angezeigt werden, wo er die jeweilige Information intuitiv suchen würde. Zum Beispiel kann dem Fahrer eines an einer Kreuzung stehenden Fahrzeugs im Seitenfenster ein für ihn verborgenes Fahrzeug dargestellt werden, welches dem Querverkehr angehört.

Vorzugsweise zeichnet sich das System dadurch aus, dass die projizierte Darstellung der Umgebung im Wahrnehmungsfeld des Fahrers mit der tatsächlichen Umgebung im Wahrnehmungsfeld des Fahrers gemischt wird. Durch diese Überlagerung von Seheindrücken in der Wahrnehmung des Fahrers kann der Fahrer gleichzeitig und ohne die Blickrichtung zu ändern sowohl das Verkehrsgeschehen beobachten als auch die dargestellten Informationen zur Kenntnis nehmen.

Weiterhin ist es vorteilhaft, dass die projizierte Darstellung der Umgebung im Wahrnehmungsfeld des Fahrers ortstreu und größentreu mit der tatsächlichen Umgebung im Wahrnehmungsfeld des Fahrers gemischt wird. Das System überlagert also die Darstellung im Wesentlichen deckungsgleich mit den Seheindrücken des Fahrers. Wenn das System ein Objekt, welches für den Fahrer sichtbar ist, für diesen in der Darstellung hervorhebt, so scheint das tatsächliche Objekt aus der Umgebung hervorgehoben zu werden. Dadurch ergibt sich eine für den Fahrer im höchsten Maße intuitive Informationsdarstellung, da die Anzeige in der Wahrnehmung des Fahrers mit der Umgebung verschmilzt.

In einer weiteren bevorzugten Ausführungsform der Erfindung ist es vorgesehen, dass die Informationsdarstellungseinrichtung ein im Wesentlichen bekanntes LC-, OLED- oder LED-Display ist. Derartige Informationsdarstellungseinrichtungen sind bereits in viele Fahrzeuge integriert und erlauben auf einfache und kostengünstige Art die Darstellung von Informationen für den Fahrer.

Weiterhin ist es vorteilhaft, dass die Helligkeit/Intensität der Darstellung an die mittels eines Lichtfühlers festgestellten Lichtverhältnisse angepasst wird. Somit kann die Helligkeit der Anzeige beispielsweise bei Dunkelheit reduziert werden, um den Fahrer nicht zu blenden und die Umgebungswahrnehmung des Fahrers nicht einzuschränken. Bei hoher Umgebungshelligkeit hingegen kann die Helligkeit der Anzeige erhöht werden, um vom Fahrer problemlos wahrgenommen zu werden.

Die vorliegende Erfindung betrifft weiter ein Verfahren, das in einem erfindungsgemäßen System durchgeführt wird. Das erfindungsgemäße Verfahren umfasst die Schritte:
- Sammeln von Umfeldinformationsdaten mittels der Umfeldinformationsdatenerfassungseinrichtung,
- Auswerten der Umfeldinformationsdaten mittels der Umfeldinformationsdatenauswerteeinrichtung und
- Darstellung einer zweidimensionalen Projektion mindestens eines dreidimensionalen Modells eines tatsächlich vorhandenen, stationären und/oder beweglichen Objekts, welches für den Fahrer nicht sichtbar ist, im Sichtfeld des Fahrers, wobei, wenn vom System eine Kollisionsgefahr mit einem Objekt erkannt wurde, andere erkannte Objekte, welche unterhalb einer festgelegten Schwellengröße Liegen, nicht mehr dargestellt werden.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: schematisch einen möglichen Aufbau des erfindungsgemäßen Systems,
- Fig. 2: eine Kreuzungssituation, in welcher das erfindungsgemäße System den Fahrer eines Fahrzeugs unterstützt und
- Fig. 3: die Wahrnehmung des Fahrers durch die Frontscheibe eines Fahrzeugs in einer Kreuzungssituation, wobei das Fahrzeug mit dem erfindungsgemäßen System ausgerüstet ist und die Frontscheibe als Anzeigeeinrichtung nutzt.

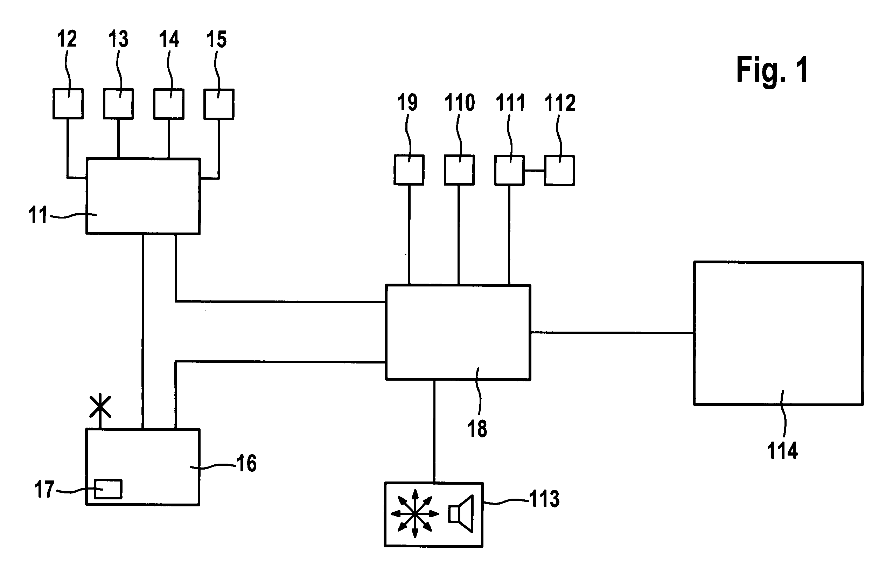

Das visuelle Fahrerinformations- und Warnsystem für einen Fahrer eines Kraftfahrzeugs ist beispielhaft in Fig. 1 dargestellt und umfasst Umfeldinformationsdatenerfassungseinrichtung 11, welche über Sensoren auf Basis von Kamera 12, Radar 13, Laser 14 und Lidar 15 verfügt. Das System umfasst weiter Umfeldinformationsdatenaustauscheinrichtung 16, welche in der Lage ist, WLAN-Verbindungen, ISM-Verbindungen, verschiedenartige Infrarotverbindungen und Mobilfunkverbindungen zu anderen Umfeldinformationsdatenaustauscheinrichtungen aufzubauen und mit diesen Daten auszutauschen. In Umfeldinformationsdatenaustauscheinrichtung 16 ist außerdem ein elektronischer Speicher 17 integriert, der Modelldaten des eigenen Fahrzeugs enthält. Die Modelldaten werden mittels einer der möglichen Verbindungsarten an die Umfeldinformationsdatenaustauscheinrichtung eines weiteren Fahrzeugs übertragen, um dem Fahrer des weiteren Fahrzeugs als dreidimensionales Modell in einer zweidimensionalen Projektion dargestellt zu werden. Außerdem verfügt das System über Umfeldinformationsdatenauswerteeinrichtung 18, die sowohl mit Umfeldinformationsdatenaustauscheinrichtung 16 und Umfeldinformationsdatenerfassungseinrichtung 11 auf Datenebene verbunden ist. Eine zusätzliche Datenverbindung besteht von Umfeldinformationsdatenerfassungseinrichtung 11 zu Umfeldinformationsdatenaustauscheinrichtung 16. Somit können alle drei Einrichtungen untereinander Daten austauschen. Umfeldinformationsdatenauswerteeinrichtung 18 liest außerdem Sensorsignale einer ESP-Einrichtung 19, einer Positionsbestimmungseinheit 110 und einer Navigationseinheit 111 aus. Navigationseinheit 111 verfügt außerdem über digitalen Kartenspeicher 112, der digitales Kartenmaterial zur Erzeugung eines dreidimensionalen Umgebungsmodells enthält. Umfeldinformationsdatenauswerteeinrichtung 18 wertet alle zur Verfügung stehenden Daten aus und gibt bei Erkennen einer Kollisionsgefahr mit einem Objekt eine akustische und haptische Warnung mittels Warneinrichtung 113 an den Fahrer aus. Außerdem stellt Umfeldinformationsdatenauswerteeinrichtung 18 alle verarbeiteten Daten auf Informationsdarstellungseinrichtung 114 dar. Informationsdarstellungseinrichtung 114 nutzt die Frontscheibe des Fahrzeugs als Anzeigeeinrichtung zur Darstellung zweidimensionaler Projektionen von dreidimensionalen Modellen. Auch optische Warnungen können mittels Informationsdarstellungseinrichtung 114 dem Fahrer dargestellt werden, ebenso wie Navigationsanweisungen von Navigationseinheit 111.

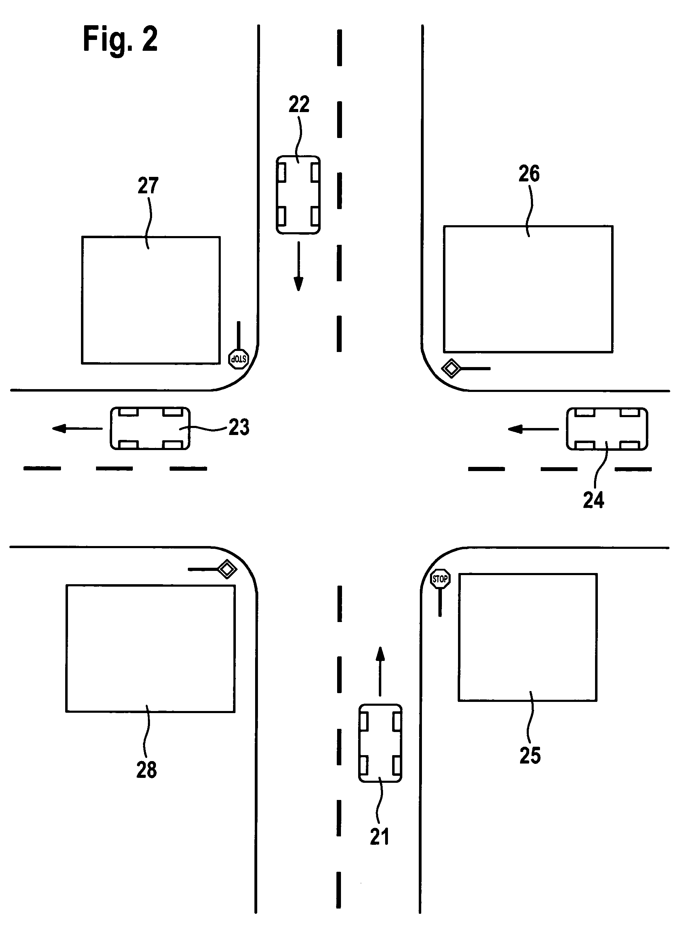

In Fig. 2 ist eine typische Kreuzungssituation an einer bebauten und daher nur schwer einsehbaren Kreuzung dargestellt. Fahrzeug 21 nähert sich auf einer nicht vorfahrtsberechtigten Straße einer Kreuzung. Da Fahrzeug 22 Fahrzeug 21 entgegenkommt und eine Sichtverbindung besteht, kann der in Fahrzeug 21 integrierte Radarsensor Fahrzeug 22 detektieren. Das erfindungsgemäße System in Fahrzeug 21 entscheidet daher, dass Fahrzeug 22 für den Fahrer sichtbar ist. Da sich Fahrzeug 22 zudem auf einer anderen Spur befindet, stellt Fahrzeug 22 kein Kollisionsrisiko für Fahrzeug 21 dar. Das erfindungsgemäße System hebt daher Fahrzeug 22 für den Fahrer nicht aus der Darstellung hervor. Da die Kreuzung von Gebäuden 25, 26, 27 und 28 umgeben ist, besteht jedoch keine direkte Sichtverbindung von Fahrzeug 21 zu Fahrzeug 23 oder zu Fahrzeug 24. Da Fahrzeug 23 jedoch wenige Augenblicke zuvor bereits die Kreuzung passiert hat und vom Radarsensor erkannt wurde, sind der Umfeldinformationsdatenerfassungseinrichtung 21 sowohl die Bewegungsrichtung als auch die Geschwindigkeit von Fahrzeug 23 bekannt. Außerdem besteht eine WLAN-Verbindung von Fahrzeug 21 zu Fahrzeug 23, die weiterhin Positionsdaten, Geschwindigkeitsdaten und Bewegungsrichtungsdaten an Fahrzeug 21 überträgt. Auch Modelldaten zur Erzeugung eines realistischen, dreidimensionalen Modells von Fahrzeug 23 in Fahrzeug 21 werden mittels der WLAN-Verbindung übertragen. Das erfindungsgemäße System in Fahrzeug 21 stellt dem Fahrer daher ein realistisches, dreidimensionales Modell von Fahrzeug 23 in einer zweidimensionalen Projektion auf der Frontscheibe dar. Weil Fahrzeug 23 für den Fahrer von Fahrzeug 21 nicht sichtbar ist, da es durch Gebäude 28 verdeckt ist, stellt die Informationsdarstellungseinrichtung Fahrzeug 23 für den Fahrer so dar, als ob dieser durch Gebäude 28 hindurchsehen könnte. Weil die Informationsdarstellungseinrichtung alle dargestellten Objekte ortstreu und größentreu darstellt, kann der Fahrer von Fahrzeug 21 das dargestellte Modell von Fahrzeug 23 an derjenigen Stelle der Frontscheibe wahrnehmen, an der es wahrnehmen würde, wenn seine Sicht durch Gebäude 28 nicht versperrt wäre. Zudem nimmt er das Modell von Fahrzeug 23 aus demjenigen Winkel wahr, welcher seiner tatsächlichen Wahrnehmung entsprechen würde. Da das System aufgrund der bekannten Bewegungsrichtung von Fahrzeug 23 erkennt, dass keine Kollisionsgefahr zwischen Fahrzeug 21 und Fahrzeug 23 besteht, hebt es Fahrzeug 23 nicht besonders aus der Umgebung hervor, um die Aufmerksamkeit des Fahrers nicht unnötig auf ein Objekt zu lenken, das keine Gefahr darstellt.

Fahrzeug 24 nähert sich ebenfalls der Kreuzung und ist gegenüber Fahrzeug 21 vorfahrtberechtigt. Da Fahrzeug 21 mittels einer WLAN-Verbindung über die Geschwindigkeit, Bewegungsrichtung und Position von Fahrzeug 24 informiert ist, erkennt das System, dass Fahrzeug 24 eine Kollisionsgefahr für Fahrzeug 21 darstellt. Weil das System außerdem keine Informationen von der Umfeldinformationsdatenerfassungseinrichtung über Fahrzeug 24 erhält, schließt es, dass Fahrzeug 24 für den Fahrer nicht sichtbar ist. Dementsprechend wird die Kollisionsgefahr als erhöht eingestuft. Fahrzeug 24 wird mittels der übertragenen Modelldaten daher nicht nur wie Fahrzeug 23 ortstreu und größentreu für den Fahrer dargestellt, so als ob dieser durch Gebäude 25 hindurchsehen könnte, sondern zudem wird die Modelldarstellung in der Projektion rot gefärbt und blinkt mit konstanter Frequenz. Gleichzeitig werden andere vom System erkannte Objekte, welche unterhalb einer festgelegten Schwellengröße liegen, nicht mehr dargestellt. Somit wird die Aufmerksamkeit des Fahrers auf Fahrzeug 24 gelenkt. Da auch Fahrzeug 24 dem Fahrer auf der Frontscheibe ortstreu und größentreu dargestellt wird und zudem die Bewegungsgeschwindigkeit und Bewegungsrichtung in der Wahrnehmung des Fahrers der Realität entsprechen (als ob der Fahrer durch Gebäude 25 hindurchsehen könnte), ist die Situation für ihn mit einem kurzen Blick erfassbar. Zudem muss er den Blick nicht vom Verkehrsgeschehen nehmen und auf einen Bildschirm im Armaturenbrett richten, da die Anzeigeeinrichtung die Frontscheibe des Fahrzeugs ist.

Gemäß einem weiteren Anwendungsbeispiel wird das in Fig. 2 dargestellte Kreuzungsszenario dem Fahrer nicht auf der Windschutzscheibe angezeigt, sondern auf einem in das Armaturenbrett integrierten Display. Das Display stellt in Echtzeit ein Kamerabild der Umgebung dar, in welches Fahrzeug 23 und Fahrzeug 24 derart integriert sind, als ob die Kamera durch Gebäude 28 und Gebäude 25 hindurchsehen kann. Da von Fahrzeug 23 und Fahrzeug 24 kein Kamerabild zur Verfügung steht, werden beide Fahrzeuge mittels der in Fahrzeug 21 empfangenen Modelldaten als dreidimensionale Modell dargestellt und in das Kamerabild entsprechend ihrer realen Position eingefügt.

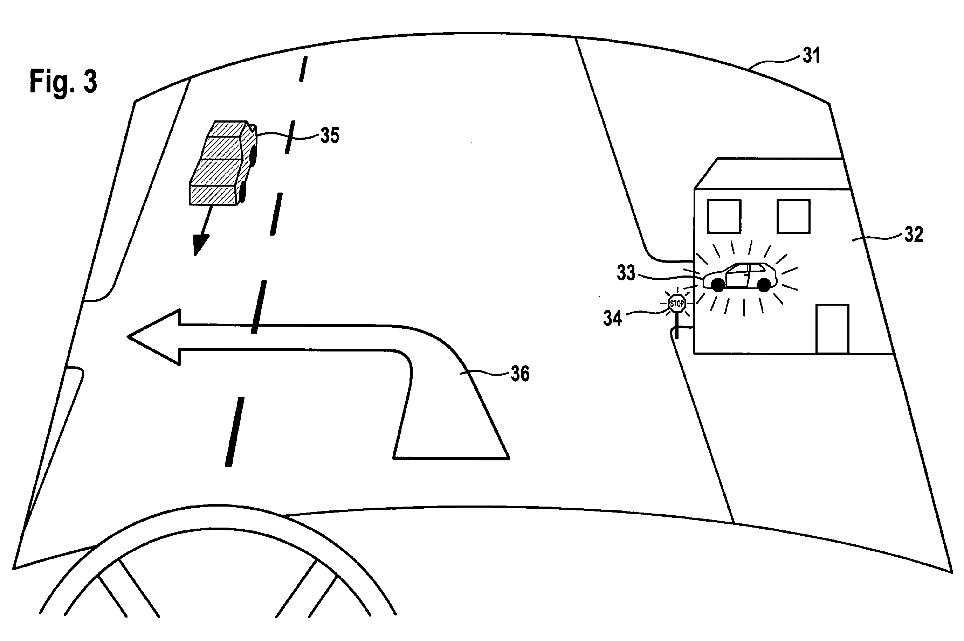

Fig. 3 zeigt eine weitere beispielhafte Ausführungsform des erfindungsgemäßen Systems aus Sicht des Fahrers eines Fahrzeugs, wobei das System die Frontscheibe des Fahrzeugs als Anzeigeeinrichtung nutzt. Der Fahrer beobachtet das Verkehrsgeschehen durch die Frontscheibe 31 des Fahrzeugs, während er sich auf einer nicht vorfahrtsberechtigten Straße einer Kreuzung nähert. Das System erkennt mittels eines Kamerasensors der Umfeldinformationsdatenerfassungseinrichtung ein Stoppschild 34 und schließt daraus, dass der Fahrer an der Kreuzung nicht vorfahrtsberechtigt ist. Diese Information wird zusätzlich mittels des im System vorhandenen digitalen Kartenmaterials verifiziert. Um den Fahrer darauf hinzuweisen, hebt das System Stoppschild 34 optisch hervor, indem es Stoppschild 34 auf der Frontscheibe gelb blinkend darstellt. Die gelb blinkende Darstellung von Stoppschild 34 ist dabei aus Sicht des Fahrers ortstreu und größentreu dem tatsächlichen Stoppschild 34 überlagert. Der Fahrer nimmt also sowohl das tatsächliche Stoppschild 34 wahr, gleichzeitig aber an der selben Stelle der Windschutzscheibe, an der er das tatsächliche Stoppschild 34 wahrnimmt, ein gelb blinkendes Stoppschild. Somit kann das System den Fahrer auf für diesen sofort verständliche Art darauf hinweisen, dass er an der Kreuzung nicht vorfahrtsberechtigt ist. Der Fahrer erhält diese Information zudem ohne den Blick vom Verkehrsgeschehen nehmen zu müssen. Mittels einer WLAN-Verbindung der Umfeldinformationsdatenaustauscheinrichtung erhält das System zudem Informationen über Fahrzeug 33, das aus Sicht des Fahrers dem Querverkehr angehört und sich der Kreuzung vorfahrtsberechtigt nähert. Die von Fahrzeug 33 übertragenen Daten umfassen in diesem Anwendungsbeispiel Geschwindigkeitsdaten, Bewegungsrichtungsdaten, Positionsdaten, Lenkwinkeldaten und Modelldaten zur Erzeugung eines dreidimensionalen Modells. Da Fahrzeug 33 von der Umfeldinformationsdatenerfassungseinrichtung nicht erkannt wird, stuft das System Fahrzeug 33 als für den Fahrer nicht sichtbar ein. Die Umfeldinformationsdatenauswerteeinrichtung analysiert die Situation und stellt fest, dass eine Kollisionsgefahr des eigenen Fahrzeugs mit Fahrzeug 33 besteht. Aus diesem Grund wird ein Modell von Fahrzeug 33 dem Fahrer nicht nur so dargestellt, als ober durch Gebäude 32 hindurchsehen könnte, sondern das Modell von Fahrzeug 33 wird rot und blinkend dargestellt. Dadurch ist der Fahrer gewarnt und kann sich entsprechend vorsichtig der Kreuzung nähern.

Dem Fahrer wird in diesem Beispiel außerdem ein Navigationshinweis 36 in Form eines Pfeils auf der Frontscheibe derart dargestellt, dass er in der Wahrnehmung des Fahrers auf der Straße liegt bzw. wie eine Straßenmarkierung auf die Straße gezeichnet wurde. Der Pfeil zeigt an der nächsten Abbiegung nach links und schneidet die Fahrbahn eines entgegenkommenden Fahrzeugs 35. Fahrzeug 35 wird mittels mehrerer Sensoren der Umfeldinformationsdatenerfassungseinrichtung erkannt und daher als für den Fahrer sichtbar eingestuft. Das Risiko einer Kollision mit Fahrzeug 35 wird daher von der Umfeldinformationsdatenauswerteeinrichtung als gering eingestuft. Um den Fahrer trotzdem auf die vorhandene Gefahr hinzuweisen, wird ein gelb gefärbtes (in Fig. 3 durch die Schraffierung dargestellt) Modell von Fahrzeug 35 auf der Frontscheibe dargestellt, welches dem tatsächlichen Fahrzeug 35 in der Wahrnehmung des Fahrers deckungsgleich überlagert ist. Da gelb eine Signalfarbe darstellt, erhöht sich durch die Gelbfärbung von Fahrzeug 35 die Aufmerksamkeit, die der Fahrer Fahrzeug 35 widmet und das Unfallrisiko wird verringert.

## Patentansprüche

1. visuelles Fahrerinformations- und Warnsystem für einen Fahrer eines Kraftfahrzeugs (21, 31), welches eine Informationsdarstellungseinrichtung, mindestens eine Umfeldinformationsdatenerfassungs- (11) und/oder mindestens eine Umfeldinformationsdatenaustauscheinrichtung (16) umfasst, wobei dem Fahrer eine zweidimensionale Projektion mindestens eines dreidimensionalen Modells eines tatsächlich vorhandenen, stationären oder beweglichen Objekts (23, 24, 33) dargestellt wird, welches für den Fahrer nicht sichtbar ist, **dadurch gekennzeichnet,**
**dass** das System bei Erkennen einer Kollisionsgefahr mit einem Objekt andere Objekte unterhalb einer vorgegebenen Schwellengröße nicht mehr darstellt.

2. System nach Anspruch 1,
**dadurch gekennzeichnet,**
**dass** das mindestens eine dargestellte Objekt (23, 24, 33) in ein dem Fahrer ebenfalls dargestelltes Kamerabild der Umgebung eingefügt wird.

3. System nach Anspruch 1,
**dadurch gekennzeichnet,**
**dass** das mindestens eine dargestellte Objekt in eine dem Fahrer ebenfalls dargestellte zweidimensionale Projektion eines dreidimensionalen Umgebungsmodells eingefügt wird.

4. System nach mindestens einem der Ansprüche 1 bis 3,
**dadurch gekennzeichnet,**
**dass** das System während des Fahrzeugbetriebs permanent aktiviert ist.

5. System nach mindestens einem der Ansprüche 1 bis 4,
**dadurch gekennzeichnet,**
**dass** das System bei Erkennen einer Kollisionsgefahr mit einem Objekt die Darstellungsart des Objekts, mit welchem Kollisionsgefahr besteht, und/oder der Umgebung, ändert.

6. System nach mindestens einem der Ansprüche 1 bis 5,
**dadurch gekennzeichnet,**
**dass** das System zusätzlich eine Umfeldinformationsdatenauswerteeinrichtung (18) umfasst, welche mindestens eines der folgenden Signale ausliest:
- Signale der Umfeldinformationsdatenerfassungseinrichtung,
- Signale der Umfeldinformationsdatenaustauscheinrichtung,
- ESP-Sensorsignale,
- Positionsbestimmungseinheitssignale und
- Navigationseinheitssignale.

7. System nach mindestens einem der Ansprüche 1 bis 6,
**dadurch gekennzeichnet,**
**dass** die Umfeldinformationsdatenerfassungseinrichtung (11) auf Basis von Radar (13) und/oder Kamera (12) und/oder Lidar (15) und/oder Laser (14) Umfeldinformationsdaten erfasst.

8. System nach Anspruch 6,
**dadurch gekennzeichnet,**
**dass** die Umfeldinformationsdatenauswerteeinrichtung (18) die mittels Umfeldinformationsdatenerfassungs- (11) und/oder Umfeldinformationsdatenaustauscheinrichtung (18) erfassten Daten auf eine mögliche Kollisionsgefahr des eigenen Fahrzeugs (21, 31) mit für den Fahrer nicht sichtbaren Objekten (23, 24, 33) hin analysiert.

9. System nach Anspruch 8,
**dadurch gekennzeichnet,**
**dass** ein ausschließlich mittels Fahrzeug-zu-X-Kommunikation wahrnehmbares Objekt (23, 24, 33) als "für den Fahrer nicht sichtbar" eingestuft wird.

10. System nach mindestens einem der Ansprüche 8 oder 9,
**dadurch gekennzeichnet,**
**dass** ein mittels mindestens eines Umfeldsensors (12, 13, 14, 15) wahrnehmbares Objekt (22, 35) als "für den Fahrer sichtbar" eingestuft wird.

11. System nach mindestens einem der Ansprüche 8 bis 10,
**dadurch gekennzeichnet,**
**dass** die Umfeldinformationsdatenauswerteeinrichtung (18) aus den von der Umfeldinformationsdatenerfassungseinrichtung (11) erfassten oder aus den von der/den Umfeldinformationsdatenaustauscheinrichtung (16) empfangenen Daten ein dreidimensionales Umgebungsmodell errechnet.

12. System nach mindestens einem der Ansprüche 1 bis 11,
**dadurch gekennzeichnet,**
**dass** die Umfeldinformationsdarstellungseinrichtung (114) ein im Wesentlichen bekanntes Head-Up-Display (HUD) ist.

13. System nach Anspruch 12,
**dadurch gekennzeichnet,**
**dass** das HUD die Darstellung in das gesamte Verkehrsbeobachtungssichtfeld des Fahrers einprojiziert.

14. System nach mindestens einem der Ansprüche 1 bis 13,
**dadurch gekennzeichnet,**
**dass** die projizierte Darstellung der Umgebung im Wahrnehmungsfeld des Fahrers ortstreu und größentreu mit der tatsächlichen Umgebung im Wahrnehmungsfeld des Fahrers gemischt wird.

15. System nach mindestens einem der Ansprüche 1 bis 14,
**dadurch gekennzeichnet,**
**dass** die Informationsdarstellungseinrichtung (114) ein im Wesentlichen bekanntes LC-, OLED- oder LED-Display ist.

16. Verfahren, das in einem System gemäß mindestens einem der Ansprüche 1 bis 15 durchgeführt wird, umfassend die Schritte:
- Sammeln von Umfeldinformationsdaten mittels der Umfeldinformationsdatenerfassungseinrichtung (11) und
- Auswerten der Umfeldinformationsdaten mittels der Umfeldinformationsdatenauswerteeinrichtung (18),
- Darstellung einer zweidimensionalen Projektion mindestens eines dreidimensionalen Modells eines tatsächlich vorhandenen, stationären oder beweglichen Objekts, welches für den Fahrer nicht sichtbar ist, im Sichtfeld des Fahrers,
**dadurch gekennzeichnet, dass**, wenn vom System eine Kollisionsgefahr mit einem Objekt erkannt wurde, andere, erkannte Objekte, welche unterhalb einer festgelegten Schwellengröße liegen, nicht mehr dargestellt werden.

## Claims

1. Visual driver information and warning system for a driver of a motor vehicle (21, 31), which comprises an information presentation device, at least one ambient information data capture device (11) and/or at least one ambient information data interchange device (16), the driver being presented with a two-dimensional projection of at least one three-dimensional model of a stationary or moving object (23, 24, 33) which is actually present and which is not visible to the driver,
**characterized**
**in that** the system, upon identifying a danger of collision with an object, no longer presents other objects below a prescribed threshold size.

2. System according to Claim 1,
**characterized**
**in that** the at least one presented object (23, 24, 33) is inserted into a camera image of the surroundings which is likewise presented to the driver.

3. System according to Claim 1,
**characterized**
**in that** the at least one presented object is inserted into a two-dimensional projection of a three-dimensional surroundings model, which projection is likewise presented to the driver.

4. System according to at least one of Claims 1 to 3,
**characterized**
**in that** the system is permanently activated during the operation of the vehicle.

5. System according to at least one of Claims 1 to 4,
**characterized**
**in that** the system, upon identifying a danger of collision with an object, changes the type of presentation of the object with which there is a danger of collision and/or of the surroundings.

6. System according to at least one of Claims 1 to 5,
**characterized**
**in that** the system additionally comprises an ambient information data evaluation device (18) which reads at least one of the following signals:
- signals from the ambient information data capture device,
- signals from the ambient information data interchange device,
- ESP sensor signals,
- position finding unit signals and
- navigation unit signals.

7. System according to at least one of Claims 1 to 6,
**characterized**
**in that** the ambient information data capture device (11) captures ambient information data on the basis of radar (13) and/or camera (12) and/or lidar (15) and/or laser (14).

8. System according to Claim 6,
**characterized**
**in that** the ambient information data evaluation device (18) analyzes the data captured by means of the ambient information data capture device (11) and/or the ambient information data interchange device (16) for a possible danger of collision between its own vehicle (21, 31) and objects (23, 24, 33) which are not visible to the driver.

9. System according to Claim 8,
**characterized**
**in that** an object (23, 24, 33) which is perceptible exclusively by means of vehicle-to-X communication is categorized as "not visible to the driver".

10. System according to at least one of Claims 8 and 9,
**characterized**
**in that** an object (22, 35) which is perceptible by means of at least one ambient sensor (12, 13, 14, 15) is categorized as "visible to the driver".

11. System according to at least one of Claims 8 to 10,
**characterized**
**in that** the ambient information data evaluation device (18) calculates a three-dimensional surroundings model from the data captured by the ambient information data capture device (11) or from the data received from the ambient information data interchange device (16).

12. System according to at least one of Claims 1 to 11,
**characterized**
**in that** the ambient information presentation device (114) is an essentially known head up display (HUD).

13. System according to Claim 12,
**characterized**
**in that** the HUD projects the presentation into the whole traffic observation field of vision of the driver.

14. System according to at least one of Claims 1 to 13,
**characterized**
**in that** the projected presentation of the surroundings in the field of perception of the driver is mixed with the actual surroundings in the field of perception of the driver in a manner that is true to location and true to size.

15. System according to at least one of Claims 1 to 14,
**characterized**
**in that** the information presentation device (114) is an essentially known LC, OLED or LED display.

16. Method which is carried out in a system according to at least one of Claims 1 to 15, comprising the following steps:
- ambient information data are collected by means of the ambient information data capture device (11), and
- the ambient information data are evaluated by means of the ambient information data evaluation device (18),
- a two-dimensional projection of at least one three-dimensional model of a stationary or moving object which is actually present and which is not visible to the driver is presented in the field of vision of the driver,
**characterized in that** when a danger of collision with an object has been identified by the system, other identified objects which are below a stipulated threshold size are no longer presented.

## Revendications

1. Système visuel d'information et d'avertissement du conducteur d'un véhicule automobile (21, 31), le système présentant
un dispositif de présentation d'informations,
au moins un dispositif (11) de saisie de données d'informations sur l'environnement et/ou
au moins un dispositif (16) d'échange de données d'informations sur l'environnement,
une projection bidimensionnelle d'au moins un modèle tridimensionnel d'un objet existant, stationnaire ou mobile (23, 24, 33) invisible pour le conducteur étant présentée au conducteur,
**caractérisé en ce que**
lorsqu'il détecte un risque de collision avec un objet, le système ne présente plus d'autres objets situés en dessous d'un seuil de taille prédéterminé.

2. Système selon la revendication 1, **caractérisé en ce que** le ou les objets (23, 24, 33) représentés sont insérés dans une image caméra de l'environnement également présentée au conducteur.

3. Système selon la revendication 1, **caractérisé en ce que** le ou les objets présentés sont insérés dans une projection bidimensionnelle, également présentée au conducteur, d'un modèle tridimensionnel de l'environnement.

4. Système selon au moins l'une des revendications 1 à 3, **caractérisé en ce que** le système est activé en permanence pendant que le véhicule fonctionne.

5. Système selon au moins l'une des revendications 1 à 4, **caractérisé en ce que** lorsqu'il détecte un risque de collision avec un objet, le système modifie le mode de présentation de l'environnement et/ou de l'objet avec lequel il existe un risque de collision.

6. Système selon au moins l'une des revendications 1 à 5, **caractérisé en ce que** le système comporte en outre un dispositif (18) d'évaluation des données d'informations sur l'environnement qui lit au moins l'un des signaux suivants :
les signaux du dispositif de saisie de données d'informations sur l'environnement,
les signaux du dispositif d'échange de données d'informations sur l'environnement,
les signaux d'un capteur ESP,
les signaux d'une unité de détermination de position et
les signaux d'une unité de navigation.

7. Système selon au moins l'une des revendications 1 à 6, **caractérisé en ce que** le dispositif (11) de saisie de données d'informations sur l'environnement saisit des données d'informations sur l'environnement sur base d'un radar (13) et/ou d'une caméra (12) et/ou d'un lidar (15) et/ou d'un laser (14).

8. Système selon la revendication 6, **caractérisé en ce que** le dispositif (18) d'évaluation des données d'informations sur l'environnement analyse le risque éventuel de collision du véhicule propre (21, 31) avec des objets (23, 24, 33) non visibles pour le conducteur dans les données saisies au moyen du dispositif (11) de saisie de données d'informations sur l'environnement et/ou du dispositif (18) d'échange de données d'informations sur l'environnement.

9. Système selon la revendication 8, **caractérisé en ce qu'**un objet (23, 24, 33) perceptible exclusivement au moyen d'une communication véhicule-X est considéré comme "non visible pour le conducteur".

10. Système selon au moins l'une des revendications 8 ou 9, **caractérisé en ce qu'**un objet (22, 35) perceptible au moyen d'au moins un capteur d'environnement (12, 13, 14, 15) est considéré comme "visible par le conducteur".

11. Système selon au moins l'une des revendications 8 à 10, **caractérisé en ce que** le dispositif (18) d'évaluation de données d'informations sur l'environnement calcule un modèle tridimensionnel de l'environnement à partir des données saisies par le dispositif (11) de détection de données d'informations sur l'environnement ou des données reçues par le dispositif (16) d'échange de données d'informations sur l'environnement.

12. Système selon au moins l'une des revendications 1 à 11, **caractérisé en ce que** le dispositif (114) de présentation d'informations sur l'environnement est un affichage tête-haute (HUD) essentiellement connu.

13. Système selon la revendication 12, **caractérisé en ce que** le HUD projette la présentation dans l'ensemble du champ d'observation du trafic par le conducteur.

14. Système selon au moins l'une des revendications 1 à 13, **caractérisé en ce que** la présentation projetée de l'environnement dans le champ de perception du conducteur est rendue fidèle en emplacement et en taille par rapport à l'environnement effectif perceptible dans le champ de perception du conducteur.

15. Système selon au moins l'une des revendications 1 à 14, **caractérisé en ce que** le dispositif (114) de présentation d'informations est un affichage à LC, un affichage à OLED ou un affichage à LED essentiellement connus.

16. Procédé exécuté dans le système selon au moins l'une des revendications 1 à 15, le procédé comportant les étapes qui consistent à :
recueillir des données d'informations sur l'environnement au moyen du dispositif (11) de saisie de données d'informations sur l'environnement,
évaluer les données d'informations sur l'environnement au moyen du dispositif (18) d'évaluation de données d'informations sur l'environnement,
présenter dans le champ de vision du conducteur une projection bidimensionnelle d'au moins un modèle tridimensionnel d'un objet réel, stationnaire ou mobile non visible par le conducteur,
**caractérisé en ce que**
lorsqu'un risque de collision avec un objet est détecté, d'autres objets détectés par le système mais situés en dessous d'un seuil de taille prédéterminé ne sont plus présentés.
